# EUROPEAN PATENT SPECIFICATION

(11) **EP 0 460 568 B1**
(45) Date of publication and mention of the grant of the patent: **25.01.1995**
(21) Application number: 91109022.3
(22) Date of filing: 03.06.1991
(51) Int. Cl.: C01B 35/12

(54) **Process for disaggregating boronatrocalcite ore in an alkaline medium for the production of sodium borate and calcium borate**
Verfahren zum Aufschliessen von Boronatrocalciterz in einem alkalischen Medium für die Herstellung von Natriumborat und Calciumborat
Procédé de désagrégation de minerai de boronatrocalcite dans un milieu alcalin pour la production de borate de sodium et de borate de calcium

(30) Priority: 08.06.1990 IT 2059090
(43) Date of publication of application: 11.12.1991
(73) Proprietor: Colorobbia Italia S.p.a., 50053 Sovigliana Vinci (Firenze) (IT)
(72) Inventor: Pepi, Mario, I-50050 Limite Sull'Arno, (Florence) (IT)
(74) Representative: Gervasi, Gemma, Dr.

(56) References cited:
- DD-A- 135 185
- DE-A- 3 029 349
- FR-A- 1 508 966
- FR-A- 2 091 041
- GB-A- 1 484 559
- US-A- 4 270 944

## Description

### 1. FIELD OF THE INVENTION

The present invention relates to a process for disaggregating boronatrocalcite ore (Ulexite) in an alkaline medium in order to produce sodium borate and calcium borate. In particular, said disaggregation is carried out by digestion with sodium hydroxide at high temperature and pressure.

### 2. PRIOR ART

Boronatrocalcite, or Ulexite, is an ore of formula Na₂O.2CaO.5B₂O₃.16H₂O, which contains also magnesium, silica, aluminium and iron impurities.

It can be utilized for producing sodium borates, in particular sodium borate deca- and penta-hydrate, which are known salts also directly preparable from Tinkal and Rasorite by means of dissolution in water or mother liquors, filtration, crystallization, drying and storing.

From Ulexite it is possible also to obtain calcium borate. The latter is utilized for producing boric acid according to German patent n. 643 879 (1937), just as is described in ULLMAN Encyclopedia of Chemical Technique, 1953, 4th vol., page 585 and in KIRK-OTHMER Encyclopedia of Chemical Technology, 2nd edition, 1964, 3rd vol., page 615, by carrying out the digestion of said ore by means of sulphuric acid according to the following reactions:

(2) 2CaO.3B₂O₃.5H₂O+6H₂O+2H₂SO₄=2CaSO₄.2H₂O+6H₃BO₃

(3) 4CaO.5B₂O₃.7H₂O+12H₂O+4H₂SO₄=4CaSO₄.2H₂O+10H₃BO₃

In South America, where Ulexite is available in large amounts, the processes intended for the exploitation thereof in order to produce sodium borates and boric acid are so far economically unprofitable. In fact, in order to obtain sodium borates, Ulexite is subjected to an attack with sodium carbonate and bicarbonate according to the reaction:

(1) 2(Na₂O.2CaO.5B₂O₃.16H₂O)+2Na₂CO₃+2NaHCO₃=4CaCO₃+ 5Na₂B₄O₇+17H₂O

This process is not valid from an economical viewpoint as it requires the consumption of two reagents, namely carbonate and bicarbonate, which render the Ulexite ore not competitive with the above-mentioned processes, which make use of Tinkal and Rasorite.

To produce boric acid, Ulexite is subjected to an acid disaggregation by sulphuric acid according to the following reaction:

(4) Na₂O.2CaO.5B₂O₃.16H₂O+3H₂SO₄+10H₂O=2CaSO₄.2H₂O+ 10H₃BO₃+Na₂SO₄.10H₂O

According to this process, however, the resulting product H₃BO₃, due to the solubility of sodium sulphate, results to be polluted by sulphates (Na₂SO₄.10H₂O).

In order to reduce said pollution, the solution must be purged, which entails a decrease in the plant production, or it is necessary to provide a boric recrystallization in order to render it commercially acceptable.

As a consequence of all the foregoing, the production of boric acid starting from Ulexite is uneconomic.

### 3. SUMMARY

Thus, a process - which is the object of the present invention - has been perfected, by means of which it is possible and economically profitable to quantitatively recover from Ulexite both sodium borate and calcium borate for the production of boric acid. The process according to the present invention comprises the disaggregation of Ulexite with mother liquors containing H₃BO₃ and Na₂O in a specific ratio by means of which they are preferably maintained at a pH = 11-12, at a temperature from 120° to 200°C and at a high pressure, keeping the Ulexite aqueous suspension under intense stirring.

This process enables utilisation of Ulexite as an ore for producing borates and boric acid at costs comparable with the ones of the other boron ores (Colemanite, Rasorite, Tinkalite) and the obtention of quality products.

### 4. DETAILED DESCRIPTION OF THE INVENTION

According to the invention the Ulexite ore, crushed to a granulometry preferably below 500 »m is dispersed in mother liquors, optionally recycled mother liquors, maintained at a pH = 9-12 with a H₃BO₃/Na₂O molar ratio ranging from 1.5 to 3.5, extremes included.

A preferred pH range is from 11 to 12 with a H₃BO₃/Na₂O molar ratio ranging from 2.0 to 2.5.

In this Ulexite disaggregation step, the aqueous dispersion is maintained at a temperature of 120-200°C at a pressure of 2-16 bars and under intense stirring.

The process of the invention can be schematically represented by the following reaction:

(5) 2(Na₂O.2CaO.5B₂O₃.16H₂O)+1/2Na₂O= 5/2Na₂O.2B₂O₃.10H₂O+4CaO.5B₂O₃.7H₂O

During the reaction step the pH of the solution spontaneously varies from pH 11-12 to pH 10-11 and the H₃BO₃/Na₂O molar ratio ranges from 2-2.5 to 3-3.5 for the dissolution of sodium borate and for permitting to reach the crystallization range values of sodium borate decahydrate (which however now remains still all in solution).

The suspension, after a digestion of about 30-60 minutes, is sent to filtration where, by means of washing with warm water at about 60°C, sodium borate in solution and solid calcium borate are quantitatively recovered; the latter is then sent to drying and subsequently to storing, or it is sent to the production of H₃BO₃, for example according to the cited known techniques.

The solution recovered from filtration is preferably crystallized in vacuum crystallizers, the vacuum being such as to maintain the solution at 30°C in order to precipitate, quantitatively also in this case, sodium borate decahydrate Na₂B₄O₇.10H₂O. Said product, after centrifugation, is sent to drying and then it is passed to storing and subsequently, if necessary, it is dissolved at about 90°C in mother liquors and recrystallized at 70°C to produce Na₂B₄O₇.5H₂O, which, after centrifugation, is dried and then sent to silos.

Said recrystallization is preferably carried out by using film crystallizers and by cooling with an air flow so as to maintain the solution at a temperature of about 70°C.

The mother liquors recovered from sodium borate crystallization at 30°C are recycled to the disaggregation reaction - after having checked the pH and the H₃BO₃/Na₂O molar ratio - with make-up addition of the sodium hydroxide which is necessary to conduct the reaction.

The reaction yields for sodium borate and calcium borate are around 100% of the theoretical values, on condition that it is operated in a closed cycle with a total recycle of the mother liquors. The yield of H₃BO₃ obtained from Ca borate is around 95%.

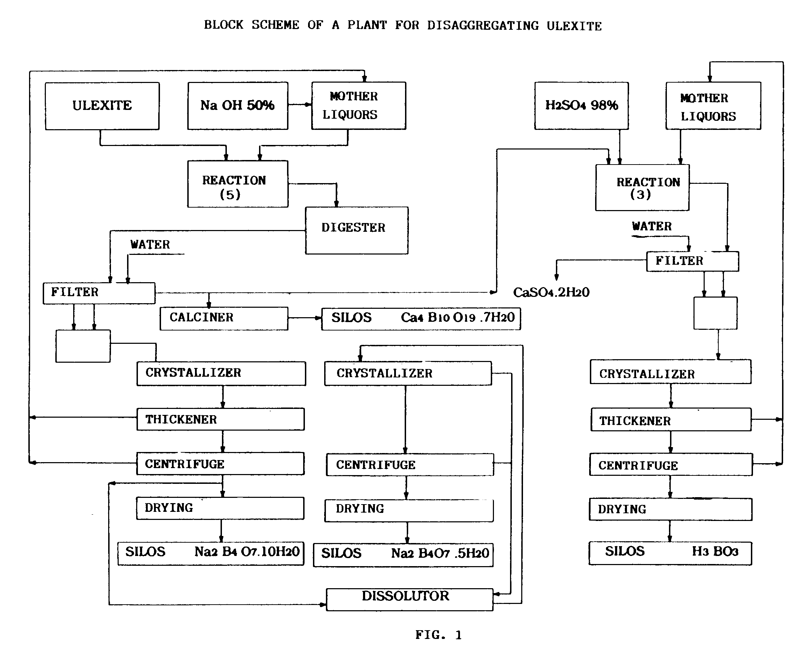

The above illustrated operative steps are schematically shown in figure 1, wherefrom it is clearly inferable that by means of the process of the invention it is possible to produce in a continuous cycle, under regular operating conditions, borates and boric acid starting from Ulexite, in an economically profitable manner.

The following example is given to better illustrate the present invention; however it shall not be construed as to be a limitation thereof.

### EXAMPLE

There was prepared a synthetic sodium borate mother liquor weighing 3,827 g, with a content of 33.38 g/kg of H₃BO₃ and 15 g/kg of Na₂O, with H₃BO₃/Na₂O molar ratio equal to 2.22, and 700 g of Peruvian Ulexite, with a content of 688.29 g/kg of H₃BO₃, 71.53 g/kg of Na₂O and 131 g/kg of CaO are added.

The suspension was maintained under stirring at a temperature of 150°C and at a pressure of 5 bars for 30 minutes.

The resulting suspension had a pH equal to 10-11 with a H₃BO₃/Na₂O molar ratio equal to 3.5, it was filtered, thereby obtaining 1,100 g of a solid product consisting of calcium borate, which, after washing with 423 g of water, had a humidity of 70% and a total content of H₃BO₃ equal to 236.75 g/kg, of CaO equal to 83.36 g/kg, of Na₂O equal to 4.18 g/kg, and 3,850g of a liquid having a content of H₃BO₃ equal to 90.68 g/kg and of Na₂O equal to 26.72 g/kg.

The filtrate was crystallized at 30°C, therefrom obtaining 379 g of sodium borate decahydrate at 10% of humidity, which, after drying, provided a product with a H₃BO₃ content of 649 g/kg and a Na₂O content of 164.98 g/kg, besides 3,471 of mother liquors with a H₃BO₃ content of 36,80 g/kg and a Na₂O content of 13,42 g/kg, with a H₃BO₃/Na₂O molar ratio equal to 2,74, which was brought to volume again and added with sodium hydroxide before being recycled to the reaction.

The cycle was repeated 100 times and the first cycle was started with a synthetic mother liquor having the impurities contained in the Peruvian Ulexite, and all the system reached the equilibrium after 20 cycles.

## Claims

1. A process for preparing sodium borate and calcium borate starting from Ulexite, characterized in that said material is disaggregated in mother liquors maintained at a pH 9-12 by means of H₃BO₃ and Na₂O in a H₃BO₃/Na₂O molar ratio ranging from 1.5 to 3.5, calcium borate being recovered by filtration in the form of a precipitate, after a complete digestion of the ore, while sodium borate is recovered by crystallization of the filtrate.

2. The process according to claim 1, wherein the ore is disaggregated at a temperature ranging from 120° to 200°C, at a pressure from 2 to 16 bars, under intense stirring.

3. The process according to claims 1 and 2, wherein the pH ranges from 11 to 12 and the H₃BO₃/Na₂O molar ratio ranges from 2.0 to 2.5.

4. The process according to claim 1, wherein the disaggregated material is subjected to digestion for 30-60 minutes, whereafter it is filtered and washed in order to recover the precipitated sodium borate.

5. The process according to claim 1, wherein crystallization of sodium borate is carried out in crystallizers under vacuum, maintaining the vacuum so that the temperature is of about 30°C, in order to precipitate sodium borate decahydrate.

6. The process according to claim 5, wherein sodium borate decahydrate is dissolved in water at about 90°C and recrystallized to obtain sodium borate pentahydrate, said recrystallization being carried out with film crystallizers and by cooling by means of an air stream in order to maintain the temperature at about 70°C.

## Patentansprüche

1. Verfahren zum Herstellen von Natriumborat und Calciumborat, ausgehend von Ulexit, dadurch **gekennzeichnet,** dass das Material in Mutterlaugen, die auf einem pH-Wert von 9 bis 12 mit Hilfe von H₃BO₃ und Na₂O bei einem H₃BO₃/Na₂O-Molverhältnis im Bereich von 1,5 bis 3,5 gehalten werden, aufgeschlossen wird, wobei Calciumborat mittels Filtration in Form eines Niederschlags nach vollständigem Aufschluss des Erzes gewonnen wird, während Natriumborat mittels Kristallisation des Filtrats gewonnen wird.

2. Verfahren nach Anspruch 1, wobei das Erz bei einer Temperatur im Bereich von 120 bis 200°C bei einem Druck von 2 bis 16 bar unter intensivem Rühren aufgeschlossen wird.

3. Verfahren nach den Ansprüchen 1 und 2, wobei der pH-Wert im Bereich von 11 bis 12 liegt, und das H₃BO₃/Na₂O-Molverhältnis im Bereich von 2,0 bis 2,5 liegt.

4. Verfahren nach Anspruch 1, wobei das aufgeschlossene Material einem 30- bis 60-minütigen Auslaugen ausgesetzt wird, woran es anschliessend filtriert und gewaschen wird, um das gefällte Natriumborat zu gewinnen.

5. Verfahren nach Anspruch 1, wobei die Kristallisation des Natriumborats in Kristallisatoren unter Vakuum durchgeführt wird, wobei das Vakuum so gehalten wird, dass die Temperatur etwa 30°C beträgt, um Natriumboratdecahydrat zu fällen.

6. Verfahren nach Anspruch 5, wobei Natriumboratdecahydrat in Wasser bei etwa 90°C gelöst wird und unter Erhalt von Natriumboratpentahydrat umkristallisiert wird, wobei die Umkristallisation mit Filmkristallisatoren und unter Kühlen mittels eines Luftstroms durchgeführt wird, um die Temperatur auf etwa 70°C zu halten.

## Revendications

1. Procédé pour préparer du borate de sodium et du borate de calcium à partir du l'ulexite, caractérisé en ce que ce matériau est désagrégé dans des liqueurs-mères, maintenues à un pH de 9 à 12, au moyen de H₃BO₃ et de Na₂O selon un rapport molaire H₃BO₃/Na₂O compris entre 1,5 et 3,5, du borate de calcium étant récupéré par filtration sous forme d'un précipité, après digestion complète du minerai, tandis que du borate de sodium est récupéré par cristallisation du filtrat.

2. Procédé suivant la revendication 1, dans lequel le minerai est désagrégé à une température comprise entre 120 et 200°C, à une pression de 2 à 16 bars sous une vigoureuse agitation.

3. Procédé suivant les revendications 1 et 2, dans lequel le pH est dans une gamme de 11 à 12 et le rapport molaire H₃BO₃/Na₂O est dans une gamme de 2,0 à 2,5.

4. Procédé suivant la revendication 1, dans lequel le matériau désagrégé est soumis à une digestion pendant 30 à 60 minutes, après quoi il est filtré et lavé pour récupérer le borate de sodium précipité.

5. Procédé suivant la revendication 1, dans lequel la cristallisation du borate de sodium est effectuée dans des cristalliseurs à vide, avec maintien d'un vide convenable pour que la température soit d'environ 30°C et faire précipiter le borate de sodium décahydraté.

6. Procédé suivant la revendication 5, dans lequel le borate de sodium décahydraté est dissout dans l'eau à environ 90°C et recristallisé pour obtenir du borate de sodium pentahydraté, cette recristallisation étant effectuée dans des cristalliseurs à film et par refroidissement au moyen d'un courant d'air pour maintenir la température à environ 70°C.
